(19) Europäisches Patentamt / European Patent Office / Office européen des brevets

(11) **EP 4 261 495 B1**

(12) **EUROPÄISCHE PATENTSCHRIFT**

(45) Veröffentlichungstag und Bekanntmachung des Hinweises auf die Patenterteilung:
**28.05.2025  Patentblatt 2025/22**

(21) Anmeldenummer: **23167281.7**

(22) Anmeldetag: **11.04.2023**

(51) Internationale Patentklassifikation (IPC):
***G01B 11/06*** *(2006.01)*

(52) Gemeinsame Patentklassifikation (CPC):
**G01B 11/06**

(54) **MESS-ANORDNUNG MIT EINEM BLASFORM-EXTRUDER, VERFAHREN ZUM VERMESSEN EINES SCHMELZESCHLAUCHS ODER EINES BLASFORM-PRODUKTES SOWIE VERFAHREN ZUM BLASFORM-EXTRUDIEREN**

MEASURING ARRANGEMENT WITH A BLOW-MOULDING EXTRUDER, METHOD FOR MEASURING A MELT HOSE OR A BLOW-MOULDED PRODUCT AND METHOD FOR BLOW-MOULDING EXTRUSION

DISPOSITIF DE MESURE AVEC UNE EXTRUDEUSE-SOUFFLAGE, PROCÉDÉ DE MESURE D'UN TUYAU DE FUSION OU D'UN PRODUIT MOULÉ PAR SOUFFLAGE ET PROCÉDÉ DE SOUFFLAGE-EXTRUSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.04.2022  DE 102022108942**

(43) Veröffentlichungstag der Anmeldung:
**18.10.2023  Patentblatt 2023/42**

(73) Patentinhaber: **CiTEX Holding GmbH**
**49324 Melle (DE)**

(72) Erfinder: **Petermann, Jan Hendrik**
**49328 Melle (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
**DE-A1- 102019 108 299     DE-A1- 3 816 273**
**DE-B3- 102009 058 361**

**Beschreibung**

Die Erfindung betrifft eine Mess-Anordnung mit einem Blasform-Extruder, ein Verfahren zum Vermessen eines Schmelzeschlauchs oder eines Blasform-Produktes sowie ein Verfahren zum Blasform-Extrudieren.

Bei Blasform-Extrusionsverfahren wird ein Ausgangsmaterial, z. B. Kunststoff-Granulat, aufgeschmolzen und über einen Ringspalt z.B. vertikal extrudiert, so dass ein Schmelzeschlauch aus einem dünnen geschmolzenen Kunststoff-Material ausgegeben wird. Der Schmelzeschlauch kann dabei z.B. kontinuierlich oder zeitlich unterbrochen ausgestoßen werden. Weiterhin wird in einigen Fällen ein Druckluftstrahl von einer innerhalb des Ringspalts vorgesehenen Düse ausgegeben, so dass der Schmelzeschlauch entlang der Extrusions-Richtung bzw. Extrusions-Achse geblasen und gefördert wird, wobei der Schmelzeschlauch seine Form in dem Druckluftstrahl fortlaufend verändert. Die genaue Position der Wände des Schmelzeschlauches relativ zu der Extrusions-Achse bzw. Symmetrieachse des Blasform-Extruders ist somit nicht festgelegt. Der Schmelzeschlauch wird nachfolgend direkt von einem Werkzeug erfasst oder dem Werkzeug über einen Greifer zugeführt, so dass das Blasform-Produkt in dem Werkzeug ausgebildet wird, während es von innen mit Druckluft beaufschlagt wird.

Zur Ausbildung der Blasform-Produkte mit geeigneten Eigenschaften ist eine genaue Einstellung der Wanddicke erforderlich. An dem Schmelzeschlauch selbst lässt sich die Wanddicke jedoch mechanisch nicht messen; weiterhin ist eine Vermessung des in der Regel opaken Schmelzeschlauchs mit z. B. optischen Mitteln im Allgemeinen problematisch.

Zur Vermessung von Kunststoff-Produkten wie z. B. Kunststoff-Rohren sind grundsätzlich THz-Messvorrichtungen bekannt, bei denen ein THz-Sensor einen THz-Sendestrahl entlang einer optischen Achse auf z. B. die Rohrachse des Messobjektes ausrichtet und bündelt und an Grenzflächen des Messobjektes reflektierte Teil-Strahlen detektiert, so dass relevante Dimensionen des Messobjektes ermittelt werden können, insbesondere Wanddicken der Wände sowie Innen- und Außendurchmesser. Für eine genaue Vermessung ist hierbei eine Ausrichtung des THz-Sendestrahls senkrecht zur Wand des Messobjektes erforderlich, damit die reflektierten Teilstrahlen zurück zum THz-Sensor reflektiert werden und die Wanddicke senkrecht zu den Grenzflächen gemessen wird.

Aus der WO 2017/101906 A1 ist eine THz-Messvorrichtung bekannt, bei der ein Winkel des THz-Sensors verstellbar ist. Somit kann ein Rohr als Messobjekt auch bei nicht genauer Lage relativ zu dem THz-Sensor vermessen werden, indem der THz-Sensor in einer Ebene senkrecht zur Rohrachse geschwenkt und ein maximales Messsignal erfasst wird. Somit können die Wand und weitere geometrische Eigenschaften eines Rohres auch bei zunächst ungenauer Position erfasst werden.

Bei größeren Abweichungen ist jedoch eine einfache Winkelverstellung gegebenenfalls nicht ausreichend. Insbesondere kann z. B. ein Schmelzeschlauch so ungünstig liegen, dass auch bei einem einfachen Schwenken des THz-Sendestrahls kein relevantes Messsignal erfasst wird.

Die WO 2011/072650A1 beschreibt eine Düse für einen Extruder bestehend aus einem Kern und einem mindestens zweigeteilten Gehäuse, umfassend einen feststehenden Gehäusegrundkörper und ein Endteil des Gehäuses, wobei das Gehäuse den Kern so umschließt, dass zwischen Kern und Gehäuse ein Fließkanal vorhanden ist, durch den die fließfähige Masse ausgetragen werden kann. Der Fließkanal ist im Bereich der Trennung zwischen dem Gehäusegrundkörper und dem angrenzenden Endteil mittels einer elastisch verformbaren Dichtung abgedichtet, und das Endteil auf dieser Dichtung in beliebiger Richtung kippbar gelagert. Ein oder mehrere Dickenmesssensor messen die Istdicke der Masse hinter der Düse.

Aus DE10 2019108 299 B4 sind eine THz-Messvorrichtung und ein THz-Messverfahren zum Ermitteln einer Schichtdicke oder eines Abstandes eines Messobjektes bekannt, bei denen ein Terahertz-Sender Terahertz-Strahlung entlang einer optischen Achse auf das Messobjekt einstrahlt und ein Terahertz-Empfänger reflektierte Terahertz-Strahlung detektiert, wobei die Wandung des Messobjektes vermessen werden kann. Hierbei ist ein verformbarer Reflektor zum Verändern des Strahlquerschnittes vorgesehen.

DE 3816273 A1 zeigt ein Verfahren zum Herstellen von Hohlkörpern aus thermoplastischem Kunststoff, wobei ein schlauchartiger Vorformling durch Austritt aus einem Düsenspalt eines Strangpresskopfes gebildet und in einer Blasform aufgeweitet wird. Ferner wird die Lage des Vorformlings zu der Blasform gesteuert und/oder geregelt und schließlich werden die durch die Blasform entstehenden Butzen nach Verlassen der Blasform von dem Hohlkörper getrennt. Über die Länge des Vorformlings wird eine Wanddickenprogrammierung mit konventionellen Regelgeräten durchgeführt. Die Wanddickenprogrammierung kann in Längsrichtung oder Umfangsrichtung des Vorformlings erfolgen.

Die DE 10 2009 058 361 B3 beschreibt eine Düse mit einem Kern und einem mindestens zweigeteilten Gehäuse, umfassend einen fest stehenden Gehäusegrundkörper und ein Endteil des Gehäuses, an dem eine fließfähige Masse die Düse verlässt. Hierbei wird aus der fließfähigen Masse ein Körper mit genau definierter Geometrie, oder auch ein schlauchförmiger Vorformling eines Extrusionsblasverfahrens ausgebildet. Weiterhin sind Verfahren genannt, bei denen unter Verwendung dieser Düse die Wanddickenverteilung einer Masse, die aus der Düse ausgetragen wird, im laufenden Prozess kontinuierlich oder zumindest in kurzen Zeitintervallen mindestens an einer Stelle gemessen wird.

Der Erfindung liegt die Aufgabe zugrunde, eine Mess-Anordnung und ein Verfahren zum Vermessen eines Schmelzeschlauches oder eines Blasform-Produktes zu schaffen, die eine sichere Vermessung mit relativ geringem Aufwand ermöglichen.

Diese Aufgabe wird durch eine Mess-Anordnung nach Anspruch 1 gelöst. Die Unteransprüche beschreiben bevorzugte Weiterbildungen. Weiterhin ist ein Verfahren zum Herstellen eines Blasform-Produktes gemäß Anspruch 12 vorgesehen.

Das erfindungsgemäße Verfahren wird insbesondere mit der erfindungsgemäßen Mess-Anordnung durchgeführt; die erfindungsgemäße MessAnordnung ist insbesondere zur Ausbildung des erfindungsgemäßen Verfahrens vorgesehen

Somit ist eine gezielte Defokussierung des THz-Sendestrahls vorgesehen, wobei der Fokus derart gelegt wird, dass die Wand des Schmelzeschlauches oder des Blasform-Produktes in einem divergenten oder auch konvergenten Strahlenbereich des ausgesandten THz-Sendestrahls liegt.

Hierdurch kann die zu erfassende Wand mit einer Strahlengeometrie erfasst werden, bei der ein divergenter Strahl hinreichend weit aufgefächert ist, dass ein größerer Wandbereich des Schmelzeschlauch oder des BlasformProduktes beleuchtet wird und weiterhin die Strahlung mit einem größeren Winkelbereich des konvergenten oder divergenten Strahlenbündels die Wand erfasst.

Der Abstand des Fokus zu der Wand wird erfindungsgemäß in Abhängigkeit der Rayleighlänge eingestellt. Die Rayleighlänge hängt hierbei von der Wellenlänge bzw. Mittenfrequenz des THz-Sendestrahls, und der Strahlgeometrie. Erfindungsgemäß wird erkannt, dass die Rayleighlänge ein hilfreiches Bezugsmaß für die Ermittlung des Einstell-Abstandes des Brennpunkts zu der Wand darstellt. Der Einstell-Abstand ist erfindungsgemäß größer als die Rayleighlänge, z. B zwischen der Rayleighlänge und einem vorgegebenen Vielfachen der Rayleighlänge gewählt werden, z. B. dem 10-fachen, 5-fachen oder 2-fachen der Rayleighlänge.

Bei dem erfindungsgemäßen Verfahren und der erfindungsgemäßen Vorrichtung wird der THz-Sendestrahl vorzugsweise ausgegeben als kontinuierlicher oder zeitlich unterbrochener Sendestrahl, insbesondere als frequenzmodulierte Radarwelle und/oder gepulster Sendestrahl und/oder direkte Laufzeitmessung, insbesondere im Frequenzbereich von 0,01 oder 0,05 bis 50 THz, z. B. 0,05 bis 5 THz.

Erfindungsgemäß wird insbesondere auch erkannt, dass bei einer THz-Vermessung in dem Frequenzbereich von 0,05 bis 50 THz, 20 oder 5 THz und einer geeigneten Optik durch die Rayleighlänge Abstandswerte ermittelt werden, die auch in der Praxis sinnvolle Abstände darstellen. So werden mit einer vorgeschalteten Linse und üblichen Messabständen des THz-Sensors von dem Messobjekt Rayleighlängen von z. B. 10 mm bis 100mm, insbesondere 40 mm ermittelt, d.h. Werte in einem Bereich von einigen cm. Somit kann durch die THz-Strahlung und eine derartige Defokussierung eine sichere Erfassung des Messobjektes erfolgen, um bei gängigen Blasform- Extrusionsverfahren die vordere Wand sicher zu erfassen und die Wanddicke der vorderen Wand, gegebenenfalls auch weitere geometrische Eigenschaften, sicher zu ermitteln.

Vorzugsweise wird durch eine Winkel-Einstelleinrichtung der Winkel der optischen Achse des THz-Sensors eingestellt, insbesondere in einer Ebene senkrecht zur Extrusions-Achse und/oder in der Ebene, die durch die optische Achse und die Extrusions-Achse festgelegt ist. Durch diese zweidimensionale Verstellung kann insbesondere bei der Vermessung des Schmelzeschlauchs den auftretenden Verformungen des Schmelzeschlauchs besser Rechnung getragen werden als bei einer eindimensionalen Verstellung, wie sie gegebenenfalls bei extrudierten Rohren erfolgt, da ein extrudiertes Rohr im Wesentlichen nur in der Ebene senkrecht zur Extrusions-Achse durchbiegt.

Die Erfindung kann sowohl bei kontinuierlichen und auch diskontinuierlichen Blasform-Extrusionsverfahren vorgesehen sein.

Erfindungsgemäß wird weiterhin eine Regelung des Extrusionsvorgangs ermöglicht, bei der somit in Abhängigkeit der Vermessung und insbesondere der Ermittlung der geometrischen Eigenschaften des Schmelzeschlauches eine Ansteuerung des Blasform-Extruders vorgesehen ist, insbesondere einer Einstellung des Ringspaltes oder einer Extruder-Schnecke, und/oder der Düse zum Ausgeben des Druckluftstrahls.

Erfindungsgemäß können weiterhin auch bereits ausgebildete Blasform-Produkte vermessen werden, indem das Blasform-Produkt wiederum in dem geometrischen Bereich hinter dem Fokus, in dem Messabstand von einer Rayleighlänge bis zum vorgegebenen Vielfachen der Rayleighlänge angeordnet wird. Hierbei wird erkannt, dass die Vermessung eines fertigen Produktes im Allgemeinen schwierig ist, da hierfür der Abstand des BlasformProduktes gegenüber der THz-Messvorrichtung genau einzustellen ist, ohne dass hierfür geeignete Aufnahmen oder Halterungen vorgesehen sind. Durch die erfindungsgemäße Defokussierung kann ein hinreichend großer beleuchteter Wandbereich eines Blasform-Produktes sicher erfasst werden.

Der Blasform-Extruder nimmt vorzugsweise rieselfähiges Ausgangsmaterial auf und schmilzt es über eine Extrusions-Schnecke auf, und gibt die Kunststoffschmelze über den Ringspalt entlang einer Extrusions-Achse fortlaufend als Schmelzeschlauch aus.

Die Erfindung wird im Folgenden anhand der beiliegenden Zeichnungen an einigen Ausführungsformen näher erläutert. Es zeigen:

Fig. 1 eine Anordnung gemäß einer ersten Ausführungsform mit einem Blasform-Extruder mit extrudiertem Schmelzeschlauch und Werkzeug;

Fig. 2 eine Anordnung aus THz-Messvorrichtung und verschiedenen zu vermessenden Blasform-Produkten;

Fig. 3 eine Darstellung der Strahlgeometrie des THz-Sendestrahls a der zu vermessenden vorderen Wand;

Fig. 4 ein Flussdiagramm eines erfindungsgemäßen Verfahrens.

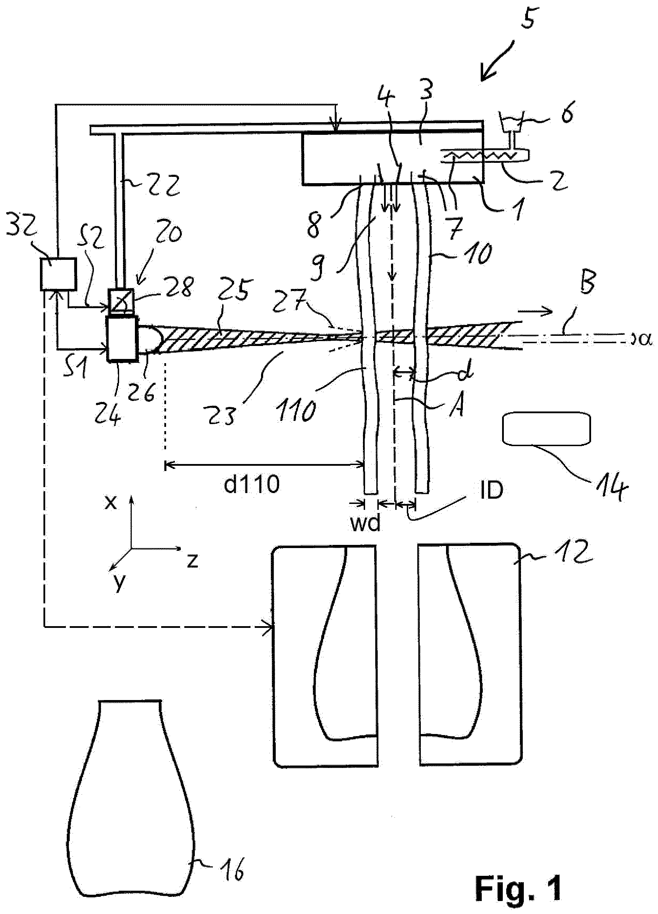

Gemäß Figur 1 ist eine Mess-Anordnung 5 vorgesehen, die einen Blasform-Extruder 1, einen von dem Blasform-Extruder 1 ausgegebenen Schmelzeschlauch 10, eine THz-Messvorrichtung 20 und vorzugsweise ein Werkzeug 12 umfasst. Der Blasform-Extruder 1 umfasst unter anderem eine ExtrudierSchnecke 2, einen Schlauchkopf 3 und eine variable Düse 4. Ein Granulat 6 wird der Extrudier-Schnecke 2 in üblicher Weise zugeführt, so dass die Extrudier-Schnecke 2 geschmolzenes Kunststoff-Material 7 durch einen Ringspalt 8 zwischen dem Schlauchkopf 3 und der variablen Düse 4 auspresst. Durch die variable Düse 4 wird fortlaufend Druckluft 9 entlang einer Extrusions-Achse A geblasen. Somit wird der Schmelzeschlauch 10 als Vorformling entlang der Extrusions-Achse A ausgeblasen, wobei der Schmelzeschlauch 10 eine Wanddicke WD aufweist, die insbesondere von der Einstellung des Ringspaltes 8, der Temperatur des geschmolzenen Kunststoff-Materials 7 und dem von der variablen Düse 4 ausgegebenen Druckluftstrahl abhängt. Somit ist insbesondere ein Abstand ID des Schmelzeschlauches 10 von der Extrusions-Achse A, variabel ist. Der Schmelzeschlauch 10 ändert fortlaufend seine Position und seinen Innendurchmesser bzw. Außendurchmesser, wobei er auch in Umfangsrichtung unsymmetrisch bzw. nicht rund ausgebildet ist.

Der Schmelzeschlauch 10 wird nachfolgend direkt von einem Werkzeug 12 erfasst, oder über einen Greifer 14 erfasst und zu dem Werkzeug 12 befördert. In Figur 1 ist das Werkzeug 12 unterhalb des Blasform-Extruders 1 bzw. des Extruderkopfes 3 angeordnet; das Werkzeug 12 kann insbesondere aber den Schmelzeschlauch 10 auch direkt unterhalb des Extruderkopfes 3 erfassen, sobald dieser eine vorgesehene Länge entlang der Extrusions-Achse A erreicht hat.

Nachfolgend wird der Schmelzeschlauch 10 in üblicher Weise in dem Werkzeug 12 von innen über die Düse 4 aufgeblasen und durch die Innenform des Werkzeugs 12 geformt, so dass nachfolgend das in Figur 1 angedeutete Blasform-Produkt 16 ausgegeben wird.

Eine THz-Messvorrichtung 20 ist über eine Struktur 22 starr mit dem Blasform-Extruder 1 verbunden und weist ein oder mehrere THz-Transceiver 24 auf, die jeweils einen THz-Sendestrahl 25 entlang einer optischen Achse B in einen Messraum 23 aussenden. Hierbei verläuft die optische Achse B in einer Grundposition zunächst senkrecht zu der Extrusions-Achse A. Der THz-Sensor 24 ist über eine Winkel-Einstelleinrichtung 28 gegenüber der Struktur 22 und somit dem Blasform-Extruder 1 verstellbar. Die Winkel-Einstelleinrichtung 28 ermöglicht insbesondere eine Verstellung eines Einstellwinkels alpha, d.h. ein Schwenken in der Ebene senkrecht zur Extrusions-Achse A, d.h. der YZ-Ebene, und/oder in der Bildebene der Fig. 1, d.h. der XZ-Ebene, die durch die Extrusions-Achse A und den THz-Sensor 24 definiert ist.

Gemäß Figur 1 kann insbesondere ein kontinuierliches Blasform-Verfahren vorgesehen sein, bei dem somit fortlaufend der Schmelzeschlauch 10 ausgegeben, ggf. zunächst von dem Greifer 14 ergriffen und weiterbefördert, und dann von dem Werkzeug 12 aufgenommen wird, um die Blasform-Produkte 16 zu formen. Alternativ hierzu kann auch ein diskontinuierliches Blasform-Verfahren oder z.B. ein kontinuierliches Verfahren mit rotierenden Blasformen eingesetzt werden.

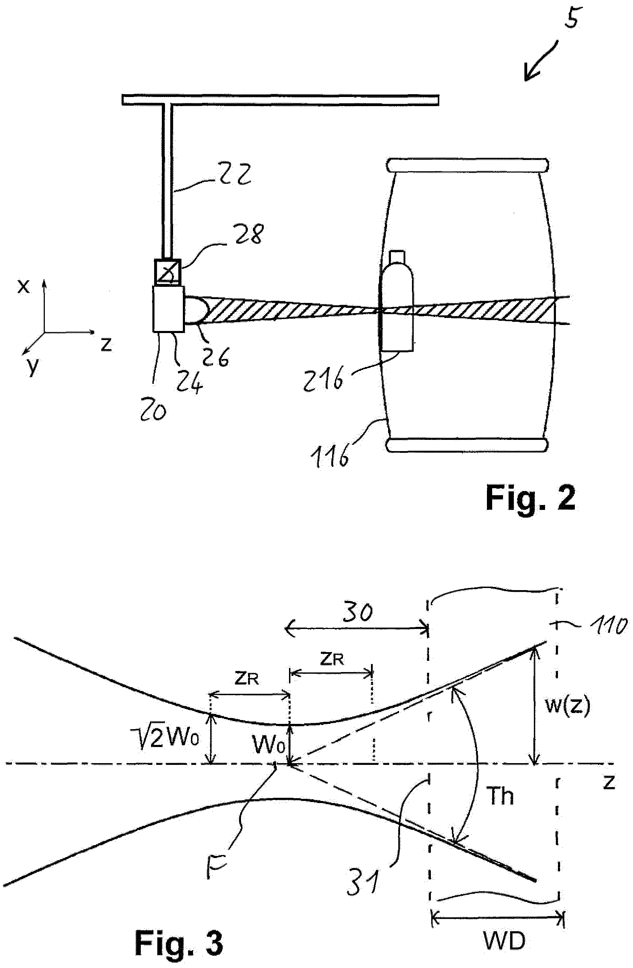

Der THz-Sendestrahl 25 wird auf einen Fokus F fokussiert, der in einer Fokalweite FL von dem THz-Sensor 24 entfernt ist. Der THz-Sensor 24 weist hierzu in üblicher Weise eine Linse 26 und z. B. einen Transceiver-Chip auf. Der THz-Sendestrahl 25 bildet im Fokus F eine Strahltaille aus, deren Radius W0 in Figur 3 eingezeichnet ist. Somit bildet der THz-Sendestrahl 25 vor dem Fokus einen konvergenten Strahlenbereich 25a und hinter dem Fokus F einen divergenten Strahlenbereich 25b aus.

Um den sich fortlaufend bewegenden und flatternden Schmelzeschlauch 10 sicher zu erfassen, wird der Fokus F vor den Schmelzeschlauch 10 fokussiert, so dass der Schmelzeschlauch 10 von dem divergenten Strahlenbereich 25b erfasst wird. Gemäß Fig. 3 wird von dem divergenten Strahlenbereich 25b ein beleuchteter Wandbereich 31 erfasst, der in einem Einstell-Abstand 30 von dem Fokus F entfernt ist. Ein Abstand d110 der vorderen Wand 110 zu dem THz-Sensor 24 bzw. der Optik 26 ergibt sich somit als Summe von F und dem Einstell-Abstand 30.

Die Rayleighlänge zR ist derartig definiert, dass bei einem Abstand der Rayleighlänge ZR von dem Fokus F der Radius W(Z) des Strahlkegels des Sendestrahls 24 um den Faktor $\sqrt{2}$ (Wurzel von zwei) größer ist als der Radius WO der Strahltaille im Fokus F. Die Rayleighlänge zR wird bei der üblichen Annäherung des Sendestrahls 24 als Gaußstrahl bzw. mit Gaußverteilung senkrecht zur optischen Achse B des Strahls, durch die nachfolgende Formel wiedergegeben:

Gemäß Figur 3 ist eine Rayleighlänge zR definiert durch:

$$z_{\mathrm{R}} = \frac{n \cdot \pi \cdot w_0^2}{\lambda_0}$$

mit

zR    Rayleighlänge
n    Brechungsindex des Mediums, hier somit n = 1 von Luft,
W(Z)    Radius des Strahlenkegels

WO    Radius der Strahltaille im Fokus F,
$\lambda_0$    Mittenfrequenz bzw. Vakuumwellenlänge des THz-Sendestrahls 25.

Der Einstell-Abstand 30 des Fokus F von der vorderen Grenzfläche der Wand 110 des Schmelzeschlauchs 10 wird in Abhängigkeit der Rayleighlänge ZR gewählt, wobei der Einstell- Abstand 30 größer als die Rayleighlänge ZR gewählt wird, da außerhalb der Rayleighlänge ZR die maximale Winkelauffächerung erreicht wird, z.B. auch bei einer geringen Strahlbreite.

Vorteilhafterweise wird als Einstell-Abstand 30 ein Bereich zwischen ZR und einem oberen Wert von G*ZR (G multipliziert mit ZR) gewählt, d.h. einem um den Faktor G höheren Wert als ZR, z.B. mit G = 10, d.h. dem zehnfachen Wert von ZR, vorzugsweise G=5 oder G=2.

Durch die Winkel-Einstelleinrichtung 28 kann der THz-Sensor 24 derartig verstellt werden, dass ein maximales Messsignal S1 detektiert wird, so dass eine Messung senkrecht durch die Wand 110 des Schmelzeschlauchs 10 erfolgt. Hierzu wird ein Einstellwinkel alpha in zwei Ebenen, d.h. zwei Einstellwinkel, verstellt, bis ein maximales Messsignal ermittelt wird, bei dem somit eine Messung senkrecht durch die Grenzflächen erfolgt. Hierbei wird der THz-Sendestrahl 24 an der Vorderfläche und Rückfläche der Wand 110 jeweils teilweise reflektiert, so dass die Reflexionspeaks in dem Reflexionsstrahl 27 erfasst werden können und - bei einem bekannten Brechungsindex n10 des Schmelzeschlauchs 10 - somit die Wanddicke wd ermittelt werden kann. Falls der Brechungsindex n10 nicht bekannt ist, kann auch vorab eine Kalibriermessung bei leerem Messraum 28 erfolgen.

Durch die Winkel-Einstelleinrichtung 28 kann somit der aktuelle Verlauf des geblasenen Schmelzeschlauches 10 jeweils kompensiert werden und eine genaue Messung der Wanddicke wd erfolgen, wobei aufgrund der Defokussierung und der Positionierung der Wand 110 im divergenten Strahlenbereich 25b ein großer Flächenbereich des Schmelzeschlauchs 10 erfasst werden kann.

Somit wird jeweils die vordere Wand 110 vermessen. Die hintere Wand kann entsprechend durch einen an der anderen Seite vorgesehenen THz-Sensor 24 erfasst werden, d.h. die THz-Messvorrichtung 20 weist mehrere um den Messraum 23 angeordnete statische THz-Sensoren 24 auf. Weiterhin können auch ein oder mehrere THz-Sensoren 24 vollumfänglich um den Schmelzeschlauch rotieren oder reversieren, d.h. hin- und herschwenken.

Die Ansteuerung der THz-Sensoren 24 und Auswertung der Messsignale S1 erfolgt über eine Steuereinrichtung 32. In Abhängigkeit der Messung kann nachfolgend eine Regelung des Blasform-Extruders 1 erfolgen, insbesondere durch Einstellung des Ringspaltes 8 und/oder der Extrudierschnecke 2.

Figur 2 zeigt eine weitere Ausführungsform mit einer Vermessung von fertiggestellten Blasform-Produkten 116, 216 aus einem entsprechenden Kunststoff-Material. Da die Position des Blasform-Produktes 116, 216 zunächst nicht bekannt ist, kann wiederum der THz-Sendestrahl 25 auf einen entsprechenden Einstell-Abstand 30 fokussiert werden, um im divergenten Strahlenbereich 25b die vordere Wand der Blasform-Produkte 116, 216 sicher zu erfassen.

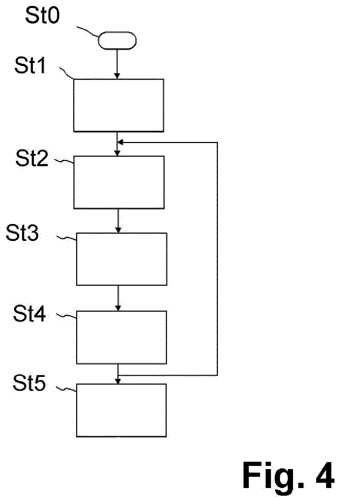

Figur 4 zeigt somit das erfindungsgemäße Verfahren,

mit einem Start in Schritt ST0, bei dem die Messanordnung mit der THz-Messvorrichtung 20 bereitgestellt und positioniert wird,

nachfolgend in Schritt ST1 der Blasform-Extruder 1 fortlaufend einen Schmelzeschlauch 10 ausbildet und ausbläst, oder das Blasform-Produkt 16, 116, 216 positioniert wird,

gemäß Schritt ST2 der THz-Sensor 24 den THz-Sendestrahl 25 entlang der optischen Achse B ausgibt und wie oben beschrieben fokussiert.

Gemäß Schritt ST3 wird der THz-Reflexionsstrahl 27 vom THz-Sensor 24 aufgenommen und ausgewertet,

so dass in Schritt ST4 nachfolgend die geeignete Verstellung der Winkel-Einstelleinrichtung 28 erfolgt, um die optische Achse B senkrecht auf die Wand 110 des Schmelzeschlauchs 10 oder des Blasform-Produktes einzustellen.

Während und nach der Verstellung wird somit wiederum gemäß Schritt ST2 der THz-Sendestrahl 25 ausgegeben, um während der Verstellung fortlaufend den Schmelzeschlauch 10 oder das Blasform-Produkt zu vermessen.

Nachfolgend wird wie oben beschrieben bei der ersten Ausführungsform in Schritt ST5 der Schmelzeschlauch 10 direkt von dem Werkzeug 12 oder dem dazwischengeschalteten Greifer 14 erfasst und nachfolgend in dem Werkzeug 12 verformt, um die Blasform-Produkte 16 bzw. 116, 216 auszugeben.

Bezugszeichenliste

| 1 | Blasform-Extruder |
|---|---|
| 2 | Extruder-Schnecke |
| 3 | Schlauchkopf, Extruderkopf |
| 4 | variable Düse |
| 5 | Mess-Anordnung |
| 6 | Granulat |
| 7 | geschmolzenes Kunststoff-Material |
| 8 | Ringspalt |
| 9 | Druckluft |
| 10 | Schmelzeschlauch als Vorformling |
| 12 | Werkzeug |
| 14 | Greifer |
| 16 | Blasform-Produkt |

| | |
|---|---|
| 20 | THz-Messvorrichtung |
| 22 | feste Struktur zwischen dem Blasform-Extruder 1 und der Winkel-Einstelleinrichtung 28 |
| 23 | Messraum |
| 24 | THz-Sensor |
| 25 | THz-Sendestrahl |
| 25a | konvergenter Strahlenbereich |
| 25b | divergenter Strahlenbereich |
| 26 | Optik, Linse |
| 27 | THz-Reflexionsstrahl |
| 28 | Winkel-Einstelleinrichtung |
| 30 | Einstell-Abstand zwischen dem Fokus F und dem Schmelzeschlauch 10 |
| 31 | durch den THz-Sendestrahl 25 beleuchteter Wandbereich der vorderen Wand 110 |
| 32 | Steuereinrichtung |
| 110 | vordere Wand des Schmelzeschlauchs 10 |
| 116, 216 | Blasform-Produkte |
| | |
| A | Extrusions-Achse, Symmetrieachse des Blasform-Extruders 1 |
| B | optische Achse des THz-Sensors 24 |
| F | Fokus |
| FL | Fokalweite, Brennweite |
| ID | Abstand des Schmelzeschlauchs von A |
| WO | Radius der Strahltaille bzw. des Brennflecks |
| d110 | Abstand der vorderen Wand von der Optik 26 |
| Th (Theta) | Öffnungswinkel des THz-Sendestrahls 25 nach dem Fokus F |
| alpha | Einstellwinkel der optischen Achse B |
| wd | Wanddicke der vorderen Wand 110 |
| S1 | Messsignal |
| S2 | Winkel-Einstellsignal |
| S3 | Steuersignal an Extruder |
| ZR | Rayleighlänge |

**Patentansprüche**

1. Mess-Anordnung (5) zur Vermessung eines Schmelzeschlauches (20) oder eines Blasformproduktes (16, 116, 216), wobei die Mess-Anordnung (5) aufweist:

    - einen von einem Blasform-Extruder (1) durch einen Ringspalt (8) entlang einer Extrusions-Achse (A) ausgegebenen Schmelzeschlauch (10) oder ein entlang einer Extrusions-Achse (A) extrudiertes Blasform-Produkt (16, 116, 216),
    - eine THz-Messvorrichtung (20) mit mindestens einem THz-Sensor (24), wobei der THz-Sensor (24) eine Optik (26) zum Fokussieren eines THz-Sendestrahls (25) auf einen Fokus (F) aufweist,
    - eine Steuereinrichtung (32), die eingerichtet ist, Messsignale (S1) von der THz-Messvorrichtung (20) aufzunehmen und zumindest eine Wanddicke (wd) einer vorderen Wand (110) des Schmelzeschlauchs (10) oder des Blasformproduktes (16, 116, 216) zu ermitteln,

    wobei die vordere Wand (110) in einem divergenten Strahlenbereich (25b) des THz-Sendestrahls (25) hinter dem Fokus (F) oder in einem konvergenten Strahlenbereich (25a) vor dem Fokus (F) liegt,
    wobei die vordere Wand (110) einen Einstell-Abstand (30) zu dem Fokus aufweist, der in einem Bereich von oberhalb einer Rayleighlänge (ZR) bis zu einem vorgegebenen Vielfachen der Rayleighlänge (ZR) liegt, und
    der Brennpunkt (F) vor der Extrusions-Achse (A) und/oder der Symmetrieachse des Schmelzeschlauchs (10) oder des Blasform-Produktes (16, 116, 216) liegt.

2. Mess-Anordnung (5) nach Anspruch 1, **dadurch gekennzeichnet, dass** die Steuereinrichtung (32) eingerichtet ist, weiterhin eine oder mehrere Messgrößen zu berechnen:
einen Abstand (d110) der vorderen Wand (110) von dem THz-Sensor (24), einen Innendurchmesser, einen Außendurchmesser des Schmelzeschlauchs (10) oder des Blasformproduktes (16, 116, 216) einen Brechungsindex des Materials des Schmelzeschlauchs (10) oder des Blasformproduktes (16, 116, 216).

3. Mess-Anordnung (5) nach Anspruch 1 oder 2, **dadurch gekennzeichnet, dass** der Einstell-Abstand in einem Bereich von oberhalb der Rayleighlänge (ZR) bis zu dem Zehnfachen, vorzugsweise Vierfachen der Rayleighlänge (ZR) liegt.

4. Mess-Anordnung (5) nach einem der vorherigen Ansprüche,
**dadurch gekennzeichnet, dass**

    sie weiterhin eine Winkel-Einstelleinrichtung (28) aufweist,
    der THz-Sensor (24) durch die Winkel-Einstelleinrichtung (28) relativ zu der Extrusions-Achse (A) verstellbar ist, und
    wobei die optische Achse (B) des THz-Sensors (24) in seiner Grundstellung senkrecht auf die Extrusions-Achse (A) ausgerichtet ist, und die Winkel-Einstelleinrichtung (28) ausgebildet ist, die optische Achse (B) einzustellen

        - in einer Messebene (YZ) senkrecht zur Extrusions-Achse (A) und/oder
        - in einer vertikalen Ebene (XZ), die durch die optische Achse (B) und die Extrusions-Achse (A) festgelegt ist.

5. Mess-Anordnung (5) nach Anspruch 4, **dadurch gekennzeichnet, dass** die Steuereinrichtung (32) eingerichtet ist, die Winkel-Einstelleinrichtung (28) zur Verstellung des THz-Sensors (24) anzusteuern, wobei die Steuereinrichtung (32) ausgebildet ist, in Abhängigkeit des Messsignals (S1) die Winkel-Einstelleinrichtung (28) derartig anzusteuern, dass ein reflektiertes Messsignal (S1) der Grenzflächen der vorderen Wand (110 maximal ist, zur Ausbildung eines senkrechten Einfalls des THz-Sendestrahls (25) auf die vordere Wand (110).

6. Mess-Anordnung (5) nach einem der vorherigen Ansprüche, **dadurch gekennzeichnet, dass** der THz-Sensor (24) ausgebildet ist, die THz-Strahlung in einem Frequenzbereich von 0,01 bis 50 THz, insbesondere 0,05 bis 5 THz, auszugeben, insbesondere vollelektronisch, als frequenzmodulierte Radarwelle, oder gepulster Strahl oder durch direkte Laufzeitmessung.

7. Mess-Anordnung (5) nach einem der vorherigen Ansprüche, **dadurch gekennzeichnet, dass** die Optik (26) ausgebildet ist, den THz-Sendestrahl (25) punktförmig oder elliptisch auf den Brennpunkt (F) zu fokussieren.

8. Mess-Anordnung (5) nach einem der vorherigen Ansprüche, **dadurch gekennzeichnet, dass** die Steuereinrichtung (32) in Abhängigkeit der Auswertung des Messsignals (S1) und der Ermittlung der Wanddicke (wd) ein Qualitäts-Signal ausgibt, insbesondere mit einem Vergleich der ermittelten Wanddicke (wd) mit vorgegebenen Wanddicken-Vergleichswerten.

9. Mess-Anordnung (5) nach einem der vorherigen Ansprüche, **dadurch gekennzeichnet, dass** die sie weiterhin aufweist

   - einen Blasform-Extruder (1) mit einem Extruderkopf (2) und einer optionalen Druckluft-Düse (4), zwischen denen ein Ringspalt (8) zur Extrusion des Schmelzeschlauchs (10) ausgebildet ist,

   wobei der Blasform-Extruder (1) ausgebildet ist, den Schmelzeschlauch entlang der Extrusions-Achse (A) durch den Ringspalt mittels des Drucklufttrahls der Druckluft-Düse auszugeben.

10. Mess-Anordnung (5) nach Anspruch 9, **dadurch gekennzeichnet, dass** die Steuereinrichtung (32) ausgebildet ist, in Abhängigkeit der ermittelten Wanddicke (wd) des Schmelzeschlauchs (10) und/oder einer ermittelten Wanddicke (wd) des fertig ausgebildeten Blasform-Produktes (16, 116, 216) den Blasform-Extruder (1) zur Regelung anzusteuern, insbesondere durch Einstellung eines Ringspalts (8) des Blasform-Extruders (1).

11. Mess-Anordnung (5) nach Anspruch 9 oder 10, **dadurch gekennzeichnet, dass**

   sie ein Werkzeug (12) zum Blasformen des Schmelzeschlauchs (10) aufweist, wobei die Steuereinrichtung (32) ausgebildet und eingerichtet ist, das Werkzeug (12) und/oder einen Greifer (14) derartig anzusteuern, dass der Schmelzeschlauch (10) in aufeinanderfolgenden Form-Vorgängen jeweils direkt von dem Werkzeug (12) oder mittels eines Greifers (14) erfasst und zu einem Blasform-Produkt (16, 116, 216) umgeformt wird.

12. Verfahren zum Vermessen eines Schmelzeschlauchs (10) eines Extrusions-Blasformverfahrens oder eines Blasform-Produktes (16, 116, 216), mit mindestens folgenden Schritten:

   Positionieren oder Bereitstellen einer THz-Messvorrichtung (20) mit einem THz-Sensor (24), der eine optische Achse (B) aufweist, (ST0) Extrudieren eines Schmelzeschlauches (10) durch einen Blasform-Extruder (1) entlang einer Extrusions-Achse (A) (ST1) oder Positionieren eines durch eine Extrusions-Achse (A) festgelegten Blasform-Produktes (16, 116, 216), (ST1) Ausgeben eines THz-Sendestrahls (25) von dem THz-Sensor (24) entlang seiner optischen Achse (B) derartig, dass die vordere Wand (110) des Schmelzeschlauchs (10) oder des Blasform-Produktes (16, 116, 216) in einem divergenten Strahlenbereich (25b) des THz-Sendestrahls (25) hinter dem Fokus (F) oder in einem konvergenten Strahlenbereich (25a) vor dem Fokus (F) liegt, (ST2) Aufnehmen eines vom Schmelzeschlauch (10) oder des Blasform-Produktes (16, 116, 216) reflektierten Reflexionsstrahls (27) und Auswerten eines im Reflexionsstrahl (27) aufgenommenen Messsignals, (ST3) Verstellen eines Einstellwinkels (alpha, 90°-alpha) zwischen einerseits der optischen Achse (B) des THz-Sensors (24) und andererseits der Extrusions-Achse (A) oder einer Orthogonalen zur Extrusions-Achse (A), in Abhängigkeit des Messsignals (S1) derartig, dass das Messsignal im Reflexionsstrahl (27) maximal wird, zur Einstellen eines senkrechten Einfalls der optischen Achse (B) auf die vordere Wand (110) des Schmelzeschlauchs (10) oder des Blasformproduktes (16, 116, 216), und Ermitteln der Wanddicke (wd) der vorderen Wand (110) (ST4), wobei

der Fokus (F) derartig eingestellt ist oder eingestellt wird, dass ein Einstell-Abstand (30) des Fokus (F) vor oder hinter der vorderen Wand (110) in einem Bereich oberhalb einer Rayleighlänge (ZR) und unterhalb eines vorgegebenen Vielfachen der Rayleighlänge (ZR) liegt.

13. Verfahren nach Anspruch 12, **dadurch gekennzeichnet, dass** die
Winkelverstellung in einer Ebene (yz) senkrecht zur Extrusions-Achse (A) und/oder in einer Ebene (xz), die durch den THz-Sensor (24) und die Extrusions-Achse (A) definiert ist, erfolgt.

14. Verfahren nach einem der Ansprüche 12 oder 13, **dadurch gekennzeichnet, dass** das Vielfache der Rayleighlänge das 10-fache oder 5-fache der Rayleighlänge ist.

15. Verfahren nach einem der Ansprüche 12 bis 14, **dadurch gekennzeichnet, dass** in Abhängigkeit einer Auswertung des Messsignals (S1) eine Qualitäts-Anzeige oder ein Qualitäts-Signal ausgegeben wird, zur Bewertung des Schmelzeschlauchs (10) oder des Blasformproduktes (16, 116, 216), insbesondere zur Ermittlung eines Fehlers der Wanddicke (wd).

16. Verfahren zum Blasform-Extrudieren von Blasform-Produkten (16, 116, 216),

wobei mit einem Verfahren nach einem der Ansprüche 12 bis 15 ein Schmelzeschlauch (10) von dem Blasform-Extruder (1) ausgegeben wird (ST1) und von der THz-Messvorrichtung (20) unter Verstellung des Einstellwinkels (90°-alpha) vermessen wird, (ST2, ST3, ST4), und der Schmelzeschlauch (10) nachfolgend direkt oder über einen Greifer (14) von einem Werkzeug (12) erfasst wird, wobei der Schmelzeschlauch (10) von innen aufgeblasen und von außen durch das Werkzeug (12) in seiner Form festgelegt wird, (ST5),
als kontinuierliches oder diskontinuierliches Verfahren.

**Claims**

1. Measuring arrangement (5) for measuring a molten tube (20) or a blow-molding product (16, 116, 216),

the measuring arrangement (5) comprising:

- a molten tube (10) put out by a blow-molding extruder (1) through a ring gap (8) along an extrusion axis (A) or a blow-molding product (16, 116, 216) extruded along an extrusion axis (A),
- a THz measuring device (20) including at least one THz sensor (24), said THz sensor (24) comprising optics (26) for focusing a THz transmission beam (25) onto a focus (F),
- a controller means (32), adapted to receive measuring signals (S1) from the THz measuring device (20) and to determine at least one wall thickness (wd) of a front wall (110) of the molten tube (10) or the blow-molding product (16, 116, 216),

the front wall (110) lying in a divergent beam area (25b) of the THz transmission beam (25) behind the focus (F) or in a convergent beam area (25a) before the focus (F),
where the front wall (110) has a set distance (30) to the focus that lies in an area above a Rayleigh length (ZR) up to a pre-determined multiple of the Rayleigh length (ZR), and
the focal point (F) lies before the extrusion axis (A) and/or the axis of symmetry of the molten tube (10) or the blow-molding product (16, 116, 216).

2. Measuring arrangement (5) according to claim 1, **characterized in that** the controller means (32) is adapted to further compute one or more measured values:
a distance (d110) of the font wall (110) from the THz sensor (24), an internal diameter, an external diameter of the molten tube (10) or the blow-molding product (16, 116, 216), a refraction index of the material of the molten tube (10) or of the blow-molding product (16, 116, 216).

3. Measuring arrangement (5) according to claim 1 or 2, **characterized in that** the set distance lies in an area above the Rayleigh (ZR) length up a tenfold, preferably a fourfold of the Rayleigh length (ZR).

4. Measuring arrangement (5) according to one of the above claims, **characterized in that**

it further comprises an angle adjusting means (28),
the THz sensor (24) being adjustable relative to the extrusion axis (A) by means of the angle adjusting means (28), and
the optical axis (B) of the THz sensor (24) in its default position being aligned perpendicular to the extrusion axis (A), and
said angle adjusting means (28) being designed to adjust the optical axis (B)

- in a measuring plane (YZ) perpendicular to the extrusion axis (A);
- in a vertical plane (XZ) determined by the optical axis (B) and the extrusion axis (A).

5. Measuring arrangement (5) according to claim 4, **characterized in that** the controller means (32) is adapted to control the angle adjusting means (28) for adjusting the THz sensor (24), the controller means (32) being designed to control the angle adjusting means (28) depending on the measuring signal (S1) in such a way that a reflected measuring signal (S1) of the boundary surfaces of the front wall (110) is at a maximum, so as to attain perpendicular irradiation of the THz transmission beam (25) onto the front wall (110).

6. Measuring arrangement (5) according to one of the above claims, **characterized in that** the THz sensor (24) is designed to emit the THz radiation in a frequency band of 0.01 to 50 THz, in particular, 0.05 to 5 THz, in particular, fully electronically, as a frequency modulated radar wave, or pulsed beam or by means of direct time-of-flight measurement.

7. Measuring arrangement (5) according to one of the above claims, **characterized in that** the optics (26) is designed to focus the THz transmission beam (25) punctiform or elliptical onto the focal point (F).

8. Measuring arrangement (5) according to one of the above claims, **characterized in that** the controller means (32) puts out a quality signal depending on the evaluation of the measuring signal (S1) and the determination of the wall thickness (wd), by comparing the determined wall thickness (wd) with pre-determined wall thickness reference values.

9. Measuring arrangement (5) according to one of the above claims, **characterized in that** it further comprises

- a blow-molding extruder (1) with an extrusion head (2) and an optional pressurized air nozzle (4), between which a ring gap (8) is formed for extruding the molten tube (10), the blow-molding extruder (1) being designed to put out the molten tube along the extrusion axis (A) through the ring gap by means of the jet of compressed air from the pressurized air nozzle.

10. Measuring arrangement (5) according to claim 9, **characterized in that** the controller means (32) is designed to control the blow-molding extruder (1) for regulation, depending on the determined wall thickness (wd) of the molten tube (10) and/or a determined wall thickness (wd) of the finished blow-molding product (16, 116, 216), in particular, by adjusting a ring gap (8) of the blow-molding extruder (1).

11. Measuring arrangement (5) according to claim 9 or 10, **characterized in that** it comprises a tool (12) for blow-molding the molten tube (10), the controller means (32) being designed and adapted to control the tool (12) and/or a grab (14) in such a manner that the molten tube (10) is grabbed in consecutive shaping processes always directly by the tool (12) or by means of a grab (14) and transformed into a blow-molding product (516, 116, 216).

12. Method for measuring a molten tube (10) for an extrusion blow-molding process or a blow-molding product (516, 116, 216), including at least the following steps:

providing a THz measuring device (20) including a THz sensor (24) which comprises an optical axis (B), (ST0)
extruding a molten tube (10) through a blow-molding extruder (1) along an extrusion axis (A) (ST1), or positioning a blow-molding product (16, 116, 216) determined by an extrusion axis (10), (ST1) emitting a THz transmission beam (25) from the THz sensor (24) along its optical axis (B) in such a manner that the front wall (110) of the molten tube (10) or the blow-molding product (16, 116, 216) lies in a divergent beam area (25b) of the THz transmission beam (25) behind the focus (F) or in a convergent beam area (25a) before the focus (F), (ST2)
receiving a reflected beam (27) reflected from the molten tube (10) or the blow-molding product (16, 116, 216) and evaluating a measuring signal received in the reflected beam (27), adjusting an adjustment angle (alpha, 90°-alpha) between the optical axis (B) of the THz sensor (24) on the one hand and the extrusion axis (A) or an orthogonal to the extrusion axis (A) on the other, depending on the measuring signal (S1), in such a way that the measuring signal in the reflected beam (27) is brought to a maximum, so as to attain perpendicular irradiation of the optical axis (B) onto the front wall (110) of the molten tube (B) or the blow-molding product (16, 116, 216), and determining the wall thickness (wd) of the front wall (110), (ST4) where the focus (F) is or is being set such that a set distance (30) of the focus (F) before or behind the front wall (110) lies in an area above a Rayleigh length (FZ) and below a pre-determined multiple of the Rayleigh length (ZR).

13. Method according to claim 12, **characterized in that** the angular adjustment happens in a plane (yz) perpendicular to the extrusion axis (A) and/or in a plane (xz) defined by the THz sensor (24) and the extrusion axis (A).

14. Method according to one of the claims 12 or 13, **characterized in that** the multiple of the Rayleigh length is the 10-fold or fivefold of the Rayleigh length.

15. Method according to one of the claims 12 through 14, **characterized in that,** depending on an evaluation of the measuring signal (S1), a quality indication or quality signal is put out for evaluating the molten tube (10) or the blow-molding product (16, 116, 216), in particular, for determining an error of the wall thickness (wd).

16. Method for blow-mold extruding blow-molding products (16, 116, 216), where a molten tube (10) is put out by the blow-molding extruder (1) using a method according to one of the claims 12 to 15 (ST1) and measured by the THz measuring device (20) with adjustment of the adjustment angle (90°-alpha), (ST2, ST3, ST4), and

subsequently, the molten tube (10) is grabbed by a tool (12) directly or via a grab (14), where the molten tube is inflated from within and its shape is determined from the outside by the tool (12), (ST5),
as a continuous or dis-continuous process.

**Revendications**

1. Dispositif de mesure (5) pour mesurer une gaîne de coulée (10) ou un produit moulé par soufflage (16, 116, 216), le dispositif de mesure (5) présentant :

- une gaîne de coulée (10) produite par une extrudeuse souffleuse (1) à travers un espace annulaire (8) le long d'un axe d'extrusion (A) ou un produit de soufflage (16, 116, 216) extrudé le long d'un axe d'extrusion (A),
- un dispositif de mesure THz (20) avec au moins un capteur THz (24), où le capteur THz (24) présente une optique (26) pour focaliser un faisceau de transmission THz (25) sur un point focal (F),
- un dispositif de commande (32) qui est conçu pour recevoir des signaux de mesure (S1) du dispositif de mesure THz (20) et déterminer au moins une épaisseur de paroi (wd) d'une paroi avant (110) de la gaîne de coulée (10) ou du produit moulé par soufflage (16, 116, 216), où la paroi avant (110) se situe dans une zone de rayonnement divergent (25b) du faisceau THz (25) derrière le point focal (F) ou dans la zone de rayonnement convergent (25a) devant le point focal (F),

où la paroi avant (110) présente un intervalle de réglage (30) au point focal, qui se situe dans une zone d'au-delà d'une longueur de Rayleigh (ZR) à une multiplicité prédéterminée de la longueur de Rayleigh (ZR), et
le point focal (F) se situe avant l'axe d'extrusion (A) et/ou avant l'axe de symétrie de la gaîne de coulée (10) ou du produit moulé par soufflage (16, 116, 216).

2. Dispositif de mesure (5) selon la revendication 1, **caractérisé en ce que** le dispositif de commande (32) est conçu pour calculer en outre au moins une valeur de mesure :
un intervalle (d110) de la paroi avant (110) depuis le capteur THz (24), un diamètre interne, un diamètre externe de la gaîne de coulée (10) ou du produit moulé par soufflage (16, 116, 216), un indice de réfraction du matériau de la gaîne de coulée (10) ou du produit moulé par soufflage (16, 116, 216).

3. Dispositif de mesure (5) selon la revendication 1 ou 2,
**caractérisé en ce que** l'intervalle de réglage se situe dans une zone d'au-delà de la longueur de Rayleigh (ZR) jusqu'à dix fois, de préférence quatre fois la longueur de Rayleigh (ZR).

4. Dispositif de mesure (5) selon l'une des revendications précédentes, **caractérisé en ce que**

il présente en outre un dispositif de réglage angulaire (28),
le capteur THz (24) est réglable par le dispositif de réglage angulaire (28) par rapport à l'axe d'extrusion (A), et
où l'axe optique (B) du capteur THz (24) est orienté dans sa position de base perpendiculairement à l'axe d'extrusion (A) et le dispositif de réglage angulaire (28) est conçu pour régler l'axe optique (B)

- dans un plan de mesure (YZ) perpendiculairement à l'axe d'extrusion (A) et/ou
- dans un plan vertical (XZ) défini par l'axe optique (B) et par l'axe d'extrusion (A).

5. Dispositif de mesure (5) selon la revendication 4, **caractérisé en ce que** le dispositif de commande (32) est conçu pour commander le dispositif de réglage angulaire (28) pour régler le capteur THz (24), où le dispositif de commande (32) est conçu pour régler le dispositif de réglage angulaire (28) en fonction du signal de mesure (S1) de sorte qu'un signal de mesure (S1) réfléchi sur les surfaces limites de la

paroi avant (110) soit maximal pour constituer une incidence perpendiculaire du rayonnement THz (25) sur la paroi avant (110).

6. Dispositif de mesure (5) selon l'une des revendications précédentes, **caractérisé en ce que** le capteur THz (24) est conçu pour émettre le rayonnement THz dans une gamme de fréquences de 0,01 à 50 THz, en particulier de 0,05 à 5 THz, en particulier de façon totalement électronique, sous forme d'onde radar à modulation de fréquence, de rayonnement pulsé ou par mesure de temps de vol directe.

7. Dispositif de mesure (5) selon l'une des revendications précédentes, **caractérisé en ce que** l'optique (26) est conçue pour focaliser le rayonnement THz (25) ponctuellement ou sous forme elliptique au point focal (F).

8. Dispositif de mesure (5) selon l'une des revendications précédentes, **caractérisé en ce que** le dispositif de commande (32) produit un signal de qualité en fonction de l'évaluation du signal de mesure (S1) et de la détermination de l'épaisseur de la paroi, en particulier avec une comparaison de l'épaisseur de paroi déterminée (wd) avec des valeurs comparatives prédéterminées d'épaisseur de paroi.

9. Dispositif de mesure (5) selon l'une des revendications précédentes, **caractérisé en ce qu'**il présente en outre

- une extrudeuse souffleuse (1) avec une tête d'extrusion (2) et une buse facultative à air comprimé (4), entre lesquelles est conçu un espace annulaire (8) pour

extruder la gaîne de coulée (10), où l'extrudeuse souffleuse (1) est conçue pour produire la gaîne de coulée le long de l'axe d'extrusion (A) à travers l'espace annulaire au moyen du jet d'air comprimé de la buse à air comprimé.

10. Dispositif de mesure (5) selon la revendication 9, **caractérisé en ce que** le dispositif de commande (32) est conçu pour réguler l'extrudeuse souffleuse (1) en fonction de l'épaisseur de paroi (wd) déterminée pour la gaîne de coulée (10) et/ou d'une épaisseur de paroi (wd) déterminée pour le produit moulé par soufflage (16, 116, 216), en particulier par réglage d'un espace annulaire (8) de l'extrudeuse souffleuse (1).

11. Dispositif de mesure (5) selon la revendication 9 ou 10, **caractérisé en ce qu'**il comporte un outil (12) de soufflage de la gaîne de coulée (10), où le dispositif de commande (32) est conçu et configuré pour commander

l'outil (12) et/ou une pince (14) de façon à ce que la gaîne de coulée (10) soit saisie au cours de processus successifs de mise en forme directement par l'outil (12) ou au moyen de la pince (14) et soit transformée en un produit moulé par soufflage (16, 116, 216).

12. Procédé de mesure d'une gaîne de coulée (10) d'un procédé d'extrusion-soufflage ou d'un produit moulé par soufflage (16, 116, 216), avec au moins les étapes suivantes :

Positionnement ou préparation d'un dispositif de mesure THz (20) avec un capteur THz (24) qui présente un axe optique (B), (ST0) Extrusion d'une gaîne de coulée (10) à travers une extrudeuse souffleuse (1) le long d'un axe d'extrusion (A), (ST1) ou
Positionnement d'un produit moulé par soufflage (16, 116, 216) défini par un axe d'extrusion (A), (ST1)
Emission d'un rayonnement THz (25) par le capteur THz (24) le long de son axe optique (B) de sorte que la paroi avant (110) de la gaîne de coulée (10) ou du produit moulé par soufflage (16, 116, 216) se trouve dans une zone de rayonnement divergent (25b) du faisceau THz (25) derrière le point focal (F) ou dans une zone de rayonnement convergent (25a) devant le point focal (F), (ST2)
Enregistrement d'un rayon de réflexion (27) réfléchi par la gaîne de coulée (10) ou le produit moulé par soufflage (16, 116, 216) et évaluation d'un signal de mesure enregistré dans le rayon de réflexion (27), (ST3)
Réglage d'un angle de réglage (alpha, 90°-alpha) entre, d'une part, l'angle optique (B) du capteur THz (24) et, d'autre part, l'axe d'extrusion (A) ou une orthogonale à l'axe d'extrusion (A) en fonction du signal de mesure (S1), de sorte que le signal de mesure dans le rayon de réflexion (27) soit maximal pour ajuster une incidence perpendiculaire de l'axe optique (B) sur la paroi avant (110) de la gaîne de coulée (10) ou du produit moulé par soufflage (16, 116, 216), et détermination de l'épaisseur de paroi (wd) de la paroi avant (110) (ST4), où le point focal (F) est réglé ou on le règle de sorte qu'un intervalle de réglage (30) du point focal (F) se trouve devant ou derrière la paroi avant (110) dans une zone supérieure à une longueur de Rayleigh (ZR) et inférieure à une multiplicité prédéterminée de la longueur de Rayleigh (ZR).

13. Procédé selon la revendication 12, **caractérisé en**

**ce que** le réglage angulaire se fait dans un plan (yz) perpendiculaire à l'axe d'extrusion (A) et/ou dans un plan (xz) qui est défini par le capteur THz (24) et l'axe d'extrusion (A).

14. Procédé selon l'une des revendications 12 ou 13, **caractérisé en ce que** la multiplicité de longueurs de Rayleigh est 10 fois ou 5 fois la longueur de Rayleigh.

15. Procédé selon l'une des revendications 12 à 14, **caractérisé en ce qu'**un affichage de qualité ou un signal de qualité est émis en fonction d'une évaluation du signal de mesure (S1) pour évaluer la gaîne de coulée (10) ou le produit moulé par soufflage (16, 116, 216), en particulier pour déterminer un défaut dans l'épaisseur de paroi (wd).

16. Procédé d'extrusion-soufflage de produits moulés par soufflage (16, 116, 216),

   où avec un procédé selon l'une des revendications 12 à 15, une gaîne de coulée (10) est produite par l'extrudeuse souffleuse (1) (ST1) et est mesurée par le dispositif de mesure THz (20) par ajustement de l'angle de réglage (90°-alpha), (ST2, ST3, ST4), puis la gaîne de coulée (10) est saisie directement ou par une pince (14) d'un outil (12), la gaîne de coulée (10) étant soufflée de l'intérieur et sa forme étant déterminée de l'extérieur par l'outil (12), (ST5), en tant que procédé continu ou discontinu.

**Fig. 1**

**Fig. 2**

**Fig. 3**

St0

St1

St2

St3

St4

St5

# Fig. 4

**IN DER BESCHREIBUNG AUFGEFÜHRTE DOKUMENTE**

**In der Beschreibung aufgeführte Patentdokumente**

- WO 2017101906 A1
- WO 2011072650 A1
- DE 102019108299 B4
- DE 3816273 A1
- DE 102009058361 B3